# EUROPEAN PATENT SPECIFICATION

(11) **EP 4 012 938 B1**
(45) Date of publication and mention of the grant of the patent: **11.03.2026**
(21) Application number: 20860755.6
(22) Date of filing: 27.08.2020
(51) Int. Cl.: H04B 17/12, H04B 17/21, H04B 7/06, H04B 7/08

(54) **METHOD AND DEVICE FOR CORRECTING MULTIPLE CHANNELS OF DIGITAL-ANALOG HYBRID BEAMFORMING**
DIGITAL-ANALOGES HYBRIDSTRAHLFORMENDES MEHRKANALIGES KORREKTURVERFAHREN UND VORRICHTUNG
PROCÉDÉ ET DISPOSITIF DE CORRECTION MULTI-CANAL DE FORMATION DE FAISCEAU HYBRIDE NUMÉRIQUE-ANALOGIQUE

(30) Priority: 03.09.2019 CN 201910829359
(43) Date of publication of application: 15.06.2022
(73) Proprietor: ZTE Corporation, Shenzhen, Guangdong 518057 (CN)
(72) Inventor: WU, Jian, Shenzhen, Guangdong 518057 (CN); PAN, Xiaojun, Shenzhen, Guangdong 518057 (CN); JIN, Hefei, Shenzhen, Guangdong 518057 (CN); YE, Yong, Shenzhen, Guangdong 518057 (CN); TIAN, Shen, Shenzhen, Guangdong 518057 (CN)
(74) Representative: Canzler & Bergmeier Patentanwälte Partnerschaft mbB
(86) International application number: PCT/CN2020/111845
(87) International publication number: WO 2021/043068

(56) References cited:
- EP-A1- 3 142 188
- WO-A1-2016/202258
- WO-A1-2019/047831
- CN-A- 104 954 083
- CN-A- 105 518 934
- CN-A- 107 528 643
- CN-A- 108 872 721
- MOTOROLA: "Open-loop beamforming in LTE", 3GPP TSG RAN1 #50 R1-073761, 24 August 2007 (2007-08-24), XP050107348

## Description

### TECHNICAL FIELD

The present disclosure relates to the field of communications, and in particular, to a method and device for correcting multiple channels of digital-analog hybrid beamforming.

### BACKGROUND

As the 5^{th} generation mobile communication network, 5G has core technologies including high band, large bandwidth, multiple antennas and beamforming. The beamforming is an important technology which determines 5G system architecture and is hardest to implement.

Based on preprocessing technology of signals of an antenna array, the beamforming can produce directional beams by adjusting a phase weight of each array element in the antenna array, thereby obtaining an obvious array gain, and achieving functions such as beam scanning and beam tracking. Therefore, the beamforming technology has a big advantage in coverage expansion, improvement of edge throughput and interference suppression. However, there is no effective solution for correcting a beamforming channel in the related technology.

CN107528643A discloses a multi-channel transmitter with DACs and ADCs, FPGA-based signal generation and calibration logic, and both offline and online correction modes using feedback from coupling paths. WO2016/202258A1 discloses antenna calibration using signal coupling and amplitude-phase matching between array elements. EP3142188A1 discloses calibration of large-scale array antennas using intra-group and inter-group calibration coefficients, determined respectively via wireless air Interface and wired coupling methods and selecting a reference path within each group and computing relative amplitude-phase differences.

### SUMMARY

The invention is defined by the appended independent claims. Dependent claims constitute embodiments of the invention.

Embodiments of the present disclosure provide a method and a device for correcting multiple channels of digital-analog hybrid beamforming, so as to at least solve the problem that there is no effective solution for correcting a beamforming channel in the related technology.

### BRIEF DESCRIPTION OF DRAWINGS

The drawings described here are intended to provide a further understanding of the present disclosure and constitutes a part of the present disclosure. The exemplary embodiments of the present disclosure and the description thereof are intended to explain the present disclosure, but do not constitute improper limitation to the present disclosure. In the drawings:
FIG. 1 is a flowchart illustrating a method for correcting multiple channels of digital-analog hybrid beamforming according to the present disclosure;
FIG. 2 is a block diagram of a system for correction of multiple channels of digital-analog hybrid beamforming and antenna detection according to the present disclosure;
FIG. 3 is a schematic structural diagram of a digital-analog hybrid correction system for 8 channels according to the present disclosure;
FIG. 4 is a normalized spectral diagram synthesized with two 640M millimeter wave signals under a delay of 10ns according to the present disclosure;
FIG. 5 is a normalized spectral diagram synthesized with two 640M millimeter wave signals under a delay of 5ns according to the present disclosure;
FIG. 6 is a normalized spectral diagram synthesized with two 640M millimeter wave signals under a delay of 1ns according to the present disclosure;
FIG. 7 is a normalized spectral diagram synthesized with two 640M millimeter wave signals under a delay of 100ps according to the present disclosure;
FIG. 8 is a schematic diagram of an online detection solution for multichannel large-scale array antenna partitions according to the present disclosure; and
FIG. 9 is a block diagram of a device for correcting multiple channels of digital-analog hybrid beamforming according to the present disclosure.

### DETAIL DESCRIPTION OF EMBODIMENTS

The present disclosure will be described in detail below with reference to the drawings and embodiments. It should be noted that the embodiments of the present disclosure and the features therein may be combined with each other if no conflict is incurred.

It should be noted that the terms "first", "second" and the like in description, claims, and drawings of the present disclosure are used for distinguishing between similar objects, but not necessarily for describing a particular order or a chronological order.

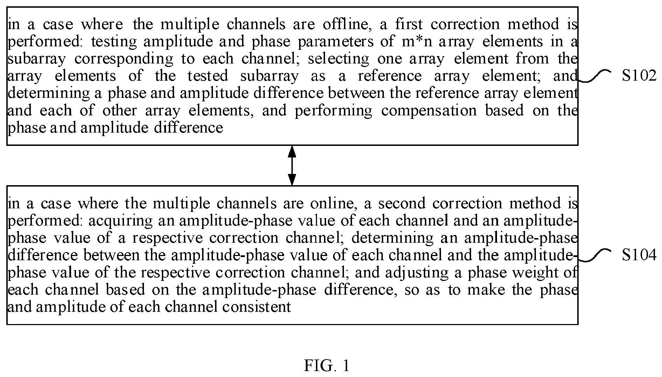

The present embodiment provides a method for correcting multiple channels of digital-analog hybrid beamforming, and FIG. 1 is a flowchart illustrating a method for correcting multiple channels of digital-analog hybrid beamforming according to the present disclosure. As shown in FIG. 1, the correction method includes operations S102 to S104.

In operation S102, in a case where multiple channels are offline, a first correction method is performed: testing amplitude and phase parameters of m*n array elements in a subarray corresponding to each channel; selecting one array element from the array elements of the tested subarray as a reference array element; and determining a phase and amplitude difference between the reference array element and each of other array elements, and performing compensation based on the phase and amplitude difference, where m and n are positive integers.

The other array elements are the array elements except the reference array element in the tested subarray.

In operation S104, in a case where the multiple channels are online, a second correction method is performed: acquiring an amplitude-phase value of each channel and an amplitude-phase value of a respective correction channel; determining an amplitude-phase difference between the amplitude-phase value of each channel and the amplitude-phase value of the respective correction channel; and adjusting a phase weight of each channel based on the amplitude-phase difference, so as to make the phase and amplitude of each channel consistent.

Through the above operations S102 to S104, consistency of amplitude and phase of links at internal analog end in a single channel is first achieved with the offline correction method; and consistency of amplitude and phase, which is from radio frequency digital-to-analog converters (RFDACs) to coupling antennas, between the channels is then achieved with the online correction method when the antennas are coupled, so that consistency of amplitude and phase of all antenna array elements of a base station is achieved, which solves the problem that there is no effective solution for correcting a beamforming channel in the related technology.

In the present disclosure, in a case where the multiple channels are transmitting channels and offline, the first correction method is performed and includes operations S11 to S15.

At operation S11, setting initial phase and amplitude parameters corresponding to array elements of all subarrays of a transmitter to be consistent and fixing other parameter configuration of the channels.

At operation S12, testing the amplitude and phase parameters of the m*n array elements in the subarray corresponding to each channel.

At operation S13, selecting one array element from the array elements of the tested subarray as the reference array element.

At operation S14, determining the phase and amplitude difference between the reference array element and each of the other array elements, and performing compensation based on the phase and amplitude difference.

At operation S15, repeatedly performing the operations S11 to S14 until all the transmitting channels are corrected.

In the present disclosure, in a case where the multiple channels are receiving channels and offline, the first correction method is performed includes operations S21 to S25.

At operation S21, setting initial phase and amplitude parameters corresponding to array elements of all subarrays of a receiver to be consistent and fixing other parameter configuration of the channels.

At operation S22, testing the amplitude and phase parameters of the m*n array elements in the subarray corresponding to each channel.

At operation S23, selecting one array element from the array elements of the tested subarray as the reference array element.

At operation S24, determining the phase and amplitude difference between the reference array element and each of the other array elements, and performing compensation based on the phase and amplitude difference.

At operation S25, repeatedly performing the operations S21 to S24 until all the receiving channels are corrected.

In the present disclosure, in a case where the multiple channels are the transmitting channels and online, the second correction method is performed and includes operations S31 to S38.

At operation S31, simultaneously transmitting intermediate frequency signals including correction sequences by digital-to-analog converters (DACs) in N channels of a transmitter, and converting the intermediate frequency signals into millimeter wave signals by transmission processing modules.

At operation S32, coupling each of the millimeter wave signals to a correction channel by an antenna, and synthesizing the millimeter wave signals into one millimeter wave signal by a multi-path combining and dividing module.

At operation S33, converting the synthesized millimeter wave signal into an intermediate frequency signal as a calibration signal by a calibration module.

At operation S34, switching the calibration signal back to an analog-to-digital converter (ADC) of a designated channel through a switch, and demodulating convergent signals to obtain the amplitude-phase value of each transmitting channel and the amplitude-phase value of the respective correction channel.

At operation S35, subtracting the amplitude-phase value of a corresponding correction channel from the amplitude-phase value of each transmitting channel to obtain the amplitude-phase difference of each transmitting channel.

At operation S36, feeding a phase difference of each transmitting channel to a baseband unit (BBU), and adjusting a baseband phase weight of each transmitting channel to make the phase of each transmitting channel consistent.

At operation S37, adjusting an attenuator of the transmission processing module based on an amplitude difference of each transmitting channel to make the amplitude of each transmitting channel consistent.

At operation S38, repeatedly performing the operations S31 to S37 at every time power is re-supplied, or at fixed time intervals.

In the present disclosure, in a case where the multiple channels are the receiving channels and online, the second correction method is performed and includes operations S41 to S48.

At operation S41, designating, by a receiver, a DAC in one of N channels to transmit an intermediate frequency signal including a correction sequence, and switching the intermediate frequency signal to a correction channel through a switch.

At operation S42, in the correction channel, converting the intermediate frequency signal into a millimeter wave signal by a calibration module, and dividing the millimeter wave signal into N millimeter wave signals by a multi-path combining and dividing module.

At operation S43, coupling each of the N millimeter wave signals to each receiving channel by a coupling antenna, and converting the millimeter wave signals into digital signals by receive processing modules and ADCs.

At operation S44, demodulating the digital signal received on each receiving channel to obtain the amplitude-phase value of each receiving channel and the amplitude-phase value of the respective correction channel.

At operation S45, subtracting the amplitude-phase value of a corresponding correction channel from the amplitude-phase value of each receiving channel to obtain the amplitude-phase difference of each receiving channel.

At operation S46, feeding a phase difference of each receiving channel to a BBU, and adjusting a signal phase weight of each receiving channel to make the phase of each receiving channel consistent.

At operation S47, adjusting an attenuator of the receive processing module based on an amplitude difference of each receiving channel to make the amplitude of each receiving channel consistent.

At operation S48, repeatedly performing the operations S31 to S37 at every time power is re-supplied, or at fixed time intervals.

The method according to the present embodiment may further include operations S106 to S108.

At operation S106, acquiring a coupling coefficient of each channel.

At operation S108, comparing a currently acquired coupling coefficient with a previously acquired coupling coefficient at fixed time intervals.

The operations S106 and S108 may be implemented in a specific application scenario as follows: a first channel opens all array elements thereof sequentially, signals with fixed and unchanged power are transmitted at a baseband, a coupling array element beside the channel receives the signals through spatial coupling, the coupled signal is received through a feedback link, value of the power is read and written to a table and is taken as the coupling coefficient of the channel, and so on, until the coupling coefficients of all array elements of each channel are recorded and written to a whole machine; and then the coupling coefficients are recorded in an online detection manner, a signal is transmitted in a non-service slot at fixed time intervals, power of the signal is received by the feedback link through an antenna coupling, and is compared with a coupling coefficient of the array element in the table. If an error is within a certain range, the array element is regard as being normal; and if the error is beyond the certain range, the array element is regard as being abnormal.

Examples are given below for illustration in conjunction with specific implementations of the present disclosure.

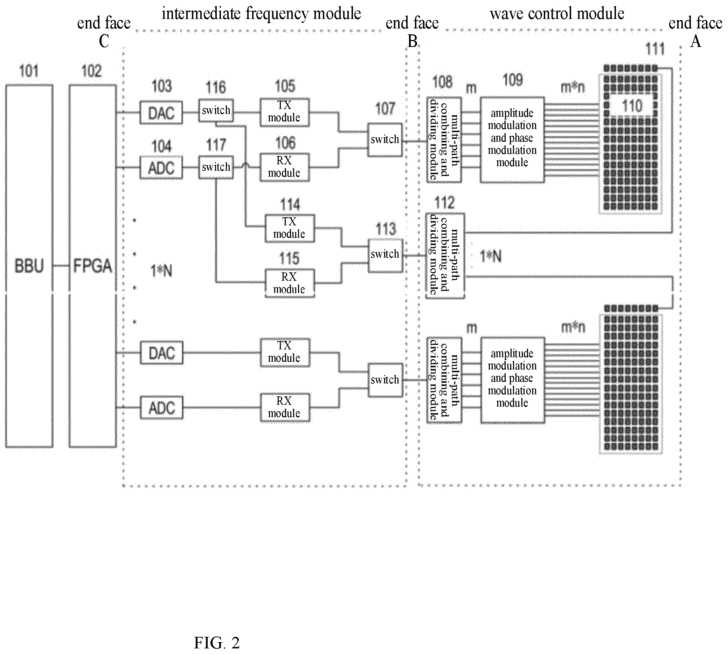

A specific implementation provides a system for correction of multiple channels of digital-analog hybrid beamforming and antenna detection, and the system has a structure as shown in FIG. 2, and includes: a BBU 101, a field-programmable gate array (FPGA) chip 102, a DAC module 103, an ADC module 104, a transmission processing (TX) module 105, a receive processing (RX) module 106, a transmitting/receiving switch 107, a multi-path combining and dividing module 108, an amplitude modulation and phase modulation module 109, an antenna subarray 110, an antenna coupling array element 111, a multi-path combining and dividing module 112, a transmitting/receiving switch 113, a TX module 114, a RX module 115, and switches 116 and 117.

The BBU 101 is configured to perform baseband signal processing.

The FPGA chip 102 is configured to perform high-speed digital signal processing in wireless communication.

The DAC module 103 is configured to perform conversion from a digital signal into an analog signal.

The ADC module 104 is configured to perform conversion from an analog signal into a digital signal.

The TX module 105 is configured to perform conversion from an intermediate frequency signal into a millimeter wave signal, and includes an intermediate frequency processing module, a filtering module, an up-conversion module, and a gain control module (i.e., an attenuator).

The RX module 106 is configured to perform conversion from a millimeter wave signal into an intermediate frequency signal, and includes an intermediate frequency processing module, a filtering module, a down-conversion module, and a gain control module (i.e., an attenuator).

The transmitting/receiving switch 107 is configured to control switching between radio frequency transmission and radio frequency reception of a channel to realize time division duplexing.

The multi-path combining and dividing module 108 is configured to combine or divide a transmitted signal or a received signal to achieve a digital-analog hybrid beamforming function.

The amplitude modulation and phase modulation module 109 is configured to simultaneously achieve control of amplitudes and phases of a plurality of antenna units.

The antenna subarray 110 is configured in such a way that each channel corresponds to one m*n antenna subarray which may perform beamforming independently or together with antenna subarrays of other channels.

The antenna coupling array element 111 is an array element in a coupling antenna subarray for realizing correction and detection functions.

The multi-path combining and dividing module 112 is configured to combine or divide multiple transmitted or received coupled signals to simultaneously achieve multi-path online calibration.

The transmitting/receiving switch 113 is configured to control switching between radio frequency transmission and radio frequency reception of a correction channel to realize transmission and reception correction.

The TX module 114 is configured to perform conversion from an intermediate frequency signal into a millimeter wave signal, and includes an intermediate frequency processing module, a filtering module, an up-conversion module, and a gain control module.

The RX module 115 is configured to perform conversion from a millimeter wave signal into an intermediate frequency signal, and includes an intermediate frequency processing module, a filtering module, a down-conversion module, and a gain control module.

The switch 116 is used for switching of transmission correction to achieve an uplink correction function.

The switch 117 is used for switching of receiving correction to achieve a downlink correction function.

Based on the above system for correction of multiple channels of digital-analog hybrid beamforming and antenna detection shown in FIG. 2, a calibration process in the present specific implementation includes the following operations.
(1) An offline calibration process (i.e., the first correction method) for transmitting channels includes operations S201 to S205.

At operation S201, initiating offline calibration, in which a link to be calibrated is from end face B to end face A, that is, the amplitude modulation and phase modulation module 109 and an antenna array are included.

At operation S202, setting initial phase and amplitude parameters corresponding to array elements of all subarrays of a wave control module for transmission to be consistent, with an initial phase generally set to 0 degree, and fixing other parameter configuration of the channels.

At operation S203, testing amplitude and phase parameters of m*n array elements in each of the subarrays.

At operation S204, selecting one array element from the array elements in each of the subarrays as a reference array element, analyzing phase and amplitude differences of other array elements, and performing compensation according to a beam codebook to ensure consistency of amplitude and phase.

At operation S205, repeatedly performing the operations S203 and S204 for offline calibration of other N-1 channels.

(2) An online calibration process (i.e., the second correction method) for transmitting channels includes operations S301 to S309.

At operation S301, initiating online calibration, in which a link to be corrected is from end face C to end face A.

At operation S302, simultaneously transmitting intermediate frequency signals including correction sequences by the DACs 103 in N channels of a transmitter, and converting the intermediate frequency signals into millimeter wave signals by the transmission processing modules 105.

At operation S303, coupling each of the millimeter wave signals to a correction channel by an antenna, and synthesizing the millimeter wave signals into one millimeter wave signal by the multi-path combining and dividing module 112.

At operation S304, converting the synthesized millimeter wave signal into an intermediate frequency signal as a calibration signal by a calibration module (including the TX module 114 and the RX module 115).

At operation S305, switching the calibration signal back to the ADC 104 of a designated channel through the switch 117, and demodulating convergent signals to obtain the amplitude-phase value of each transmitting channel and the amplitude-phase value of the respective correction channel.

At operation S306, subtracting the amplitude-phase value of a corresponding correction channel from the amplitude-phase value of each transmitting channel to obtain the amplitude-phase difference of each transmitting channel.

At operation S307, feeding a phase difference of each transmitting channel to the BBU 101, and adjusting a baseband phase weight of each transmitting channel to make the phase of each transmitting channel consistent.

At operation S308, adjusting an attenuator of the transmission processing module 105 based on an amplitude difference of each transmitting channel to make the amplitude of each transmitting channel consistent.

At operation S309, repeatedly performing the operations S302 to S308 at every time power is re-supplied, or at fixed time intervals.

(3) An offline calibration process (i.e., the first correction method) for receiving channels includes operations S401 to S405.

At operation S401, initiating offline calibration, in which a link to be calibrated is from end face B to end face A, that is, the amplitude modulation and phase modulation module 109 and an antenna array are included.

At operation S402, setting initial phase and amplitude parameters corresponding to array elements of all subarrays of a wave control module for reception to be consistent, with an initial phase generally set to 0 degree, and fixing other parameter configuration of the channels.

At operation S403, testing amplitude and phase parameters of m*n array elements in each of the subarrays.

At operation S404, selecting one array element from the array elements in each of the subarrays as a reference array element, analyzing phase and amplitude differences of other array elements, and performing compensation according to a beam codebook to ensure consistency of amplitude and phase.

At operation S405, repeatedly performing the operations S403 and S404 for offline calibration of other N-1 channels.

(4) An online calibration process (i.e., the second correction method) for receiving channels includes operations S501 to S509.

At operation S501, initiating online calibration, in which a link to be corrected is from end face C to end face A.

At operation S502, designating, by a receiver, the DAC 103 in one of N channels to transmit an intermediate frequency signal including a correction sequence, and switching the intermediate frequency signal to a correction channel through the switch 116.

At operation S503, in the correction channel, converting the intermediate frequency signal into a millimeter wave signal by a calibration module (including the TX module 114 and the RX module 115), and dividing the millimeter wave signal into N millimeter wave signals by the multi-path combining and dividing module 112.

At operation S504, coupling each of the N millimeter wave signals to each receiving channel by a coupling antenna, and converting the millimeter wave signals into digital signals by the receive processing modules 106 and the ADCs 104.

At operation S505, demodulating the digital signal received on each receiving channel to obtain the amplitude-phase value of each receiving channel and the amplitude-phase value of the respective correction channel.

At operation S506, subtracting the amplitude-phase value of a corresponding correction channel from the amplitude-phase value of each receiving channel to obtain the amplitude-phase difference of each receiving channel.

At operation S507, feeding a phase difference of each receiving channel to the BBU 101, and adjusting a signal phase weight of each receiving channel to make the phase of each receiving channel consistent.

At operation S508, adjusting an attenuator of the receive processing module 106 based on an amplitude difference of each receiving channel to make the amplitude of each receiving channel consistent.

At operation S509, repeatedly performing the operations S502 to S508 at every time power is re-supplied, or at fixed time intervals.

The above calibration processes (1) to (4) are illustrated below by taking 8 channels as an example.

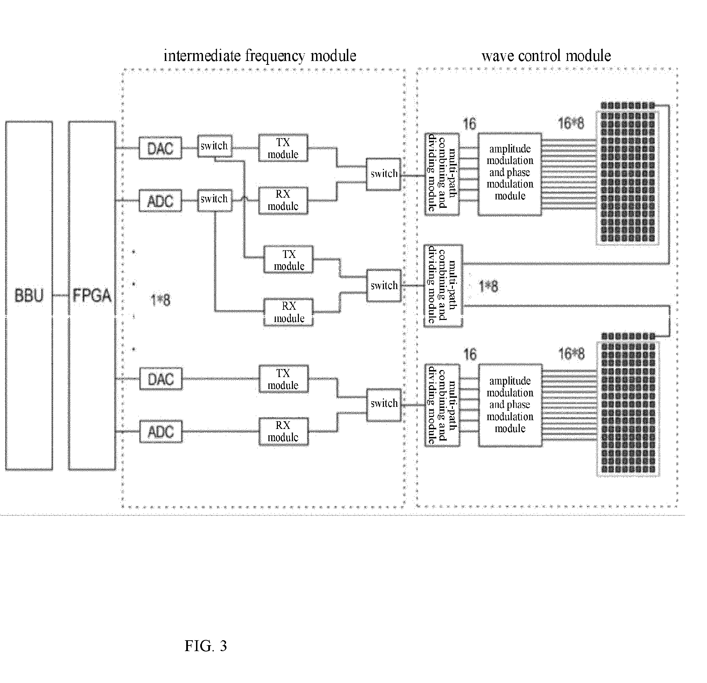

FIG. 3 is a schematic structural diagram of a digital-analog hybrid correction system for 8 channels according to the present disclosure. With reference to FIG. 3, a digital-analog hybrid correction method for 8 channels in the present disclosure includes several ways as follows.

Way 1: the 8 channels are subjected to the operations of the offline calibration process for transmission provided above, and the operations include S601 to S605.

At operation S601, initiating offline calibration, in which a link to be calibrated is from end face B to end face A, that is, the amplitude modulation and phase modulation module 109 and an antenna array are included.

At operation S602, setting initial phase and amplitude parameters corresponding to array elements of all subarrays of a wave control module for transmission to be consistent, with an initial phase generally set to 0 degree, and fixing other parameter configuration of the channels.

At operation S603, testing amplitude and phase parameters of 16*8 array elements in each of the subarrays.

At operation S604, selecting one array element from the 16*8 array elements in each of the subarrays as a reference array element, analyzing phase and amplitude differences of other array elements, and performing compensation according to a beam codebook to ensure consistency of amplitude and phase.

At operation S605, repeatedly performing the operations S603 and S604 for offline calibration of the other 7 channels.

Way 2: the 8 channels are subjected to the operations of the online calibration process for transmission provided above, and the operations include S701 to S709.

At operation S701, initiating online calibration, in which a link to be corrected is from end face C to end face A.

At operation S702, simultaneously transmitting intermediate frequency signals including correction sequences by the DACs 103 in 8 channels of a transmitter, and converting the intermediate frequency signals into millimeter wave signals by the transmission processing modules 105.

At operation S703, coupling each of the 8 millimeter wave signals to a correction channel by an antenna, and synthesizing the 8 millimeter wave signals into one millimeter wave signal by the multi-path combining and dividing module 112.

At operation S704, converting the synthesized millimeter wave signal into an intermediate frequency signal as a calibration signal by a calibration module.

At operation S705, switching the calibration signal back to the ADC 104 of a designated channel through the switch 117, and demodulating convergent signals to obtain the amplitude-phase value of each transmitting channel and the amplitude-phase value of the respective correction channel.

At operation S706, subtracting the amplitude-phase value of a corresponding correction channel from the amplitude-phase value of each transmitting channel to obtain the amplitude-phase difference of each transmitting channel.

At operation S707, feeding a phase difference of each of the 8 transmitting channels to the BBU 101, and adjusting a baseband phase weight of each transmitting channel to make the phase of each transmitting channel consistent.

At operation S708, adjusting an attenuator of the transmission processing module 105 based on an amplitude difference of each of the 8 transmitting channels to make the amplitude of each transmitting channel consistent.

At operation S709, repeatedly performing the operations S702 to S708 at every time power is re-supplied, or at fixed time intervals.

Way 3: the 8 channels are subjected to operations of the offline calibration process for reception provided above, and the operations include operations S801 to S805.

At operation S801, initiating offline calibration, in which a link to be calibrated is from end face B to end face A, that is, the amplitude modulation and phase modulation module 109 and an antenna array are included.

At operation S802, setting initial phase and amplitude parameters corresponding to array elements of all subarrays of a wave control module for reception to be consistent, with an initial phase generally set to 0 degree, and fixing other parameter configuration of the channels.

At operation S803, testing amplitude and phase parameters of 16*8 array elements in each of the subarrays.

At operation S804, selecting one array element from the 16*8 array elements in each of the subarrays as a reference array element, analyzing phase and amplitude differences of other array elements, and performing compensation according to a beam codebook to ensure consistency of amplitude and phase.

At operation S805, repeatedly performing the operations S803 and S804 for offline calibration of the other 7 channels.

Way 4: the 8 channels are subjected to the operations of the online calibration process for reception provided above, and the operations include operations S901 to S909.

At operation S901, initiating online calibration, in which a link to be corrected is from end face C to end face A.

At operation S902, designating, by a receiver, the DAC 103 in one of 8 channels to transmit an intermediate frequency signal including a correction sequence, and switching the intermediate frequency signal to a correction channel through the switch 116.

At operation S903, in the correction channel, converting the intermediate frequency signal into a millimeter wave signal by a calibration module, and dividing the millimeter wave signal into 8 millimeter wave signals by the multi-path combining and dividing module 112.

At operation S904, coupling each of the 8 millimeter wave signals to each receiving channel by a coupling antenna, and converting the 8 millimeter wave signals into digital signals by the receive processing modules 106 and the ADCs 104.

At operation S905, demodulating the digital signal received on each receiving channel to obtain the amplitude-phase value of each receiving channel and the amplitude-phase value of the respective correction channel.

At operation S906, subtracting the amplitude-phase value of a corresponding correction channel from the amplitude-phase value of each receiving channel to obtain the amplitude-phase difference of each receiving channel.

At operation S907, feeding a phase difference of each of the 8 channels to the BBU 101, and adjusting a signal phase weight of each receiving channel to make the phase of each receiving channel consistent.

At operation S908, adjusting an attenuator of the receive processing module 106 based on an amplitude difference of each of the 8 channels to make the amplitude of each receiving channel consistent.

At operation S909, repeatedly performing the operations S902 to S908 at every time power is re-supplied, or at fixed time intervals.

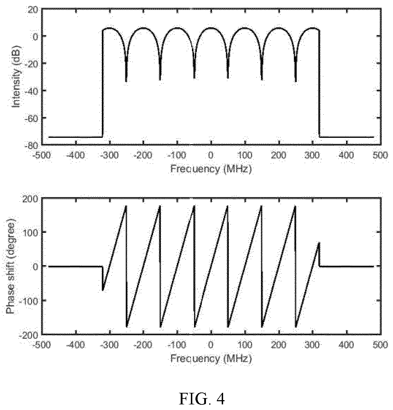

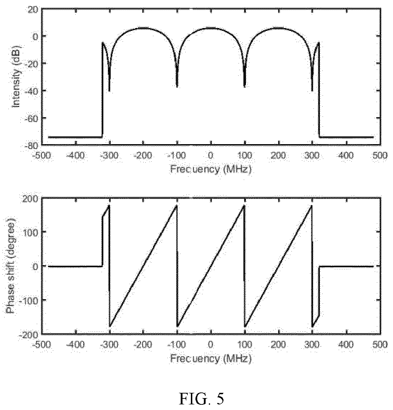

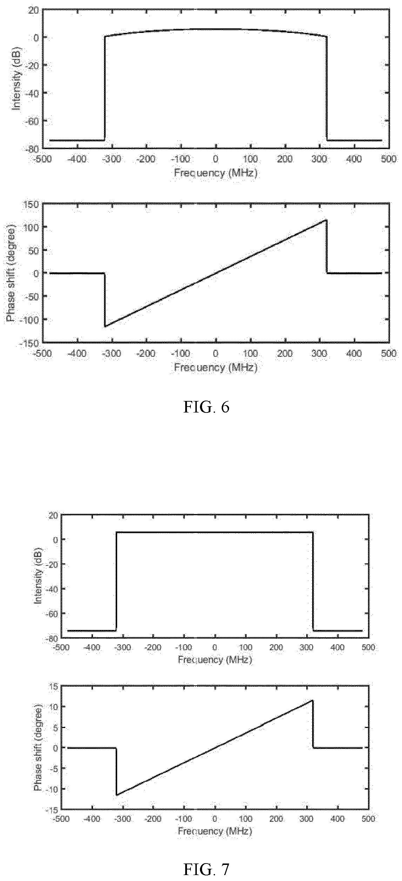

FIG. 4 to FIG. 7 are normalized spectral diagrams of synthesized channels under conditions of different delays every time power is re-supplied before online calibration. It can be seen that two channels are synthesized in a bandwidth of 640M when the delays are 1ns, 5ns, and 10ns.

Furthermore, the present disclosure further provides an implementation method based on an 8-channel antenna online detection system, and the implementation method includes operations S1001 to S1009.

At operation S1001, performing online extraction of coupling coefficients of array elements in a production process of a whole machine.

At operation S1002, opening one of the 8 channels, sequentially transmitting signals by 128 array elements of the channel, and respectively receiving power of each of the array elements by a coupling array element through spatial coupling.

At operation S1003, recording and writing the power to an offline parameter table, with the power taken as the coupling coefficient of each of the array elements with respect to the coupling array element of the channel, and the channel having 128 coupling coefficients.

At operation S1004, repeatedly performing the operations S1002 and S1003 to extract coupling coefficients of all array elements of the 8 channels, and writing the extracted coupling coefficients to the whole machine as an offline parameter file.

At operation S1005, initiating antenna array element online detection during operation.

At operation S1006, opening one of the 8 channels, sequentially transmitting signals by 128 array elements of the channel in a non-service slot, and respectively receiving power of each of the array elements by the coupling array element through spatial coupling.

At operation S1007, extracting coupling coefficients of all array elements of the 8 channels through the previous operation.

At operation S1008, comparing the extracted coupling coefficients with the offline parameter file which is written in the production process, determining that an array element is normal if a difference thereof obtained by the comparison is within 4dB, and determining that an array element is abnormal if the difference thereof obtained by the comparison is greater than 4dB.

At operation S1009, repeatedly performing the operations S1005 to S1008 at fixed time intervals, and reporting an abnormal alarm of an array element if the array element is determined to be abnormal for consecutive three times.

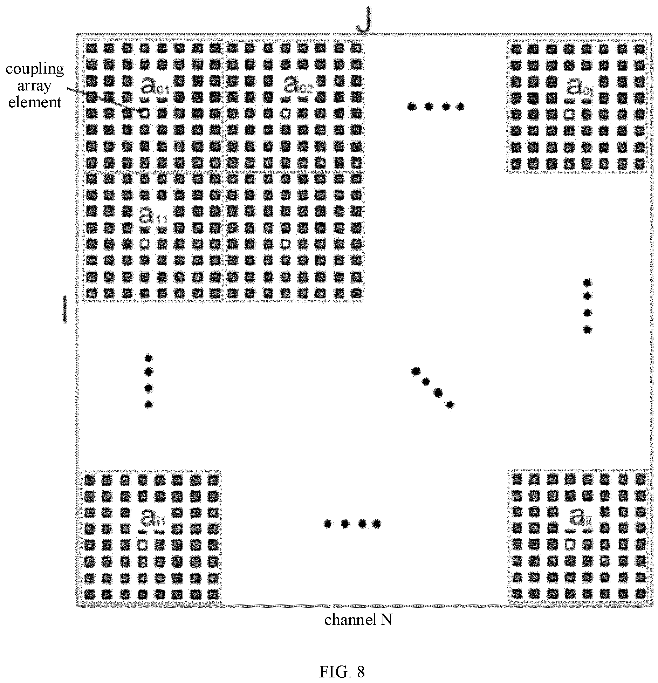

In addition, for online detection of a large-scale antenna, if each channel is detected with a separate coupling array element, power transmitted by a far array element may not be received by the coupling array element, or the power received by the coupling array element from the far array element is very low, which makes it difficult to realize detection of all array elements. FIG. 8 is a schematic diagram of an online detection solution for multichannel large-scale array antenna partitions according to the present disclosure. A coupling array element in each of the partitions shown in FIG. 8 receives a signal through a coupling link after signals are combined into one signal by a multi-path combining and dividing module. Based on which, the present disclosure provides a multichannel antenna partitioned online detection method, in which each of partitions is set on the basis that a coupling array element therein can receive power transmitted within the partition, and shapes of the partitions include a square, a circle and other shapes, and the method includes operations S1101 to S1110.

At operation S1101, extracting coupling coefficients of all array elements (except the coupling array elements) of N channels in a production process of a whole machine.

At operation S1102, dividing I*J array elements of each of the channels into i rows and j columns, and obtaining i*j partitions in total.

At operation S1103, opening one of the N channels, sequentially transmitting signals by all array elements (except the coupling array elements) of the channel, and respectively receiving power of each of the array elements by the coupling array elements through spatial coupling.

At operation S1104, recording and writing the power to an offline parameter table, with the power taken as the coupling coefficient of each of the array elements with respect to the coupling array elements of the partitions.

At operation S1105, repeatedly performing the operations S1102 to S1104 to extract coupling coefficients of all array elements (except the coupling array elements) of the N channels, and writing the extracted coupling coefficients to the whole machine as an offline parameter file.

At operation S1106, initiating antenna array element online detection during operation.

At operation S1107, opening one of the N channels, sequentially transmitting signals by all array elements (except the coupling array elements) of the channel in a non-service slot, and respectively receiving power of each of the array elements by the coupling array elements through spatial coupling.

At operation S1108, extracting coupling coefficients of all array elements of the N channels through the previous operation.
operation S1109, comparing the extracted coupling coefficients with the offline parameters which are written in the production process, determining that an array element is normal if a difference thereof obtained by the comparison is within t, and determining that an array element is abnormal if the difference thereof obtained by the comparison is beyond t.

At operation S1110, repeatedly performing the operations S1106 to S1109 at fixed time intervals, and reporting an abnormal alarm of an array element if the array element is determined to be abnormal for consecutive three times.

Through the above description of the implementations, those of ordinary skill in the art can understand clearly that the method according to the above embodiments may be implemented by software together with a necessary general-purpose hardware platform, and may also be implemented by hardware. Based on such understanding, the technical solutions of the present disclosure or a part of the technical solutions of the present disclosure contributing to the existing technology may be implemented in the form of a software product, which is stored in a storage medium (such as a Read-Only Memory (ROM)/Random Access Memory (RAM), a magnetic disk and an optical disc) and includes several instructions to enable a terminal device (which may be a mobile phone, a computer, a server or a network device) to perform the method described in the embodiment of the present disclosure.

The present disclosure further provides a device for correcting multiple channels of digital-analog hybrid beamforming, which is used to implement the above embodiments and implementations, and what is described above will not be repeated below. The term "module" used below refers to software, hardware, or a combination of software and hardware that can perform predetermined functions. Although the device described in the present disclosure is better implemented by software, the implementations of the device by hardware or a combination of software and hardware are possible and can be conceived.

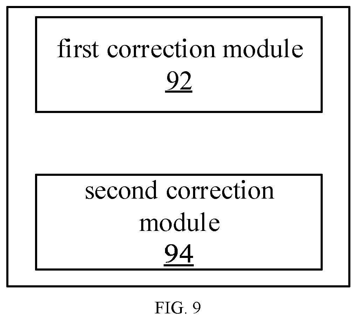

FIG. 9 is a block diagram of a device for correcting multiple channels of digital-analog hybrid beamforming according to the present disclosure. As shown in FIG. 9, the device includes: a first correction module 92 configured to perform a first correction method in a case where multiple channels are offline: testing amplitude and phase parameters of m*n array elements in a subarray corresponding to each channel; selecting one array element from the array elements of the tested subarray as a reference array element; and determining a phase and amplitude difference between the reference array element and each of other array elements, and performing compensation based on the phase and amplitude difference, where m and n are positive integers; and a second correction module 94 configured to perform a second correction method in a case where the multiple channels are online: acquiring an amplitude-phase value of each channel and an amplitude-phase value of a respective correction channel; determining an amplitude-phase difference between the amplitude-phase value of each channel and the amplitude-phase value of the respective correction channel; and adjusting a phase weight of each channel based on the amplitude-phase difference, so as to make the phase and amplitude of each channel consistent.

Optionally, in a case where the multiple channels are transmitting channels and offline, the first correction module includes: a first processing unit configured to set initial phase and amplitude parameters corresponding to array elements of all subarrays of a transmitter to be consistent and fix other parameter configuration of the channels; a first test unit configured to test the amplitude and phase parameters of the m*n array elements in the subarray corresponding to each channel; a first selection unit configured to select one array element from the array elements of the tested subarray as the reference array element; and a second processing unit configured to determine the phase and amplitude difference between the reference array element and each of the other array elements, and perform compensation based on the phase and amplitude difference until all the transmitting channels are corrected.

Optionally, in a case where the multiple channels are receiving channels and offline, the first correction module includes: a third processing unit configured to set initial phase and amplitude parameters corresponding to array elements of all subarrays of a receiver to be consistent and fix other parameter configuration of the channels; a second test unit configured to test the amplitude and phase parameters of the m*n array elements in the subarray corresponding to each channel; a second selection unit configured to select one array element from the array elements of the tested subarray as the reference array element; and a fourth processing unit configured to determine the phase and amplitude difference between the reference array element and each of the other array elements, and perform compensation based on the phase and amplitude difference until all the receiving channels are corrected.

Optionally, in a case where the multiple channels are the transmitting channels and online, the second correction module includes: a fifth processing unit configured to simultaneously transmit intermediate frequency signals including correction sequences by DACs in N channels of a transmitter, and convert the intermediate frequency signals into millimeter wave signals by transmission processing modules; a sixth processing unit configured to couple each of the millimeter wave signals to a correction channel by an antenna, and synthesize the millimeter wave signals into one millimeter wave signal by a multi-path combining and dividing module; a conversion unit configured to convert the synthesized millimeter wave signal into an intermediate frequency signal as a calibration signal by a calibration module; a seventh processing unit configured to switch the calibration signal back to an ADC of a designated channel through a switch, and demodulate convergent signals to obtain the amplitude-phase value of each transmitting channel and the amplitude-phase value of the respective correction channel; a first calculation unit configured to subtract the amplitude-phase value of a corresponding correction channel from the amplitude-phase value of each transmitting channel to obtain the amplitude-phase difference of each transmitting channel; an eighth processing unit configured to feed a phase difference of each transmitting channel to a BBU, and adjust a baseband phase weight of each transmitting channel to make the phase of each transmitting channel consistent; a first demodulation unit configured to adjust an attenuator of the transmission processing module based on an amplitude difference of each transmitting channel to make the amplitude of each transmitting channel consistent; and a first execution unit configured to trigger the second correction module to repeatedly perform the second correction method at every time power is re-supplied, or at fixed time intervals.

Optionally, in a case where the multiple channels are the receiving channels and online, the second correction module includes: a ninth processing unit configured to designate, by a receiver, a DAC in one of N channels to transmit an intermediate frequency signal including a correction sequence, and switch the intermediate frequency signal to a correction channel through a switch; a tenth processing unit configured to convert, in the correction channel, the intermediate frequency signal into a millimeter wave signal by a calibration module, and divide the millimeter wave signal into N millimeter wave signals by a multi-path combining and dividing module; an eleventh processing unit configured to couple each of the N millimeter wave signals to each receiving channel by a coupling antenna, and convert the millimeter wave signals into digital signals by receive processing modules and ADCs; a demodulation unit configured to demodulate the digital signal received on each receiving channel to obtain the amplitude-phase value of each receiving channel and the amplitude-phase value of the respective correction channel; a second calculation unit configured to subtract the amplitude-phase value of a corresponding correction channel from the amplitude-phase value of each receiving channel to obtain the amplitude-phase difference of each receiving channel; a twelfth processing unit configured to feed a phase difference of each receiving channel to a BBU, and adjust a signal phase weight of each receiving channel to make the phase of each receiving channel consistent; a second adjustment unit configured to adjust an attenuator of the receive processing module based on an amplitude difference of each receiving channel to make the amplitude of each receiving channel consistent; and a second execution unit configured to trigger the second correction module to repeatedly perform the second correction method at every time power is re-supplied, or at fixed time intervals.

It should be noted that each of the above modules may be implemented by software or hardware. When by hardware, the modules may be implemented in following ways, but not limited to the following ways: all the modules are located in a same processor; or the modules are randomly combined and located in different processors.

The present disclosure further provides a storage medium having a computer program stored thereon, and the computer program is configured to perform, when being run, the operations according to any one of the method embodiments described above.

Optionally, in the present disclosure, the storage medium may be configured to store a computer program used to perform following operations S1 to S2.

S1, in a case where multiple channels are offline, performing a first correction method: testing amplitude and phase parameters of m*n array elements in a subarray corresponding to each channel; selecting one array element from the array elements of the tested subarray as a reference array element; and determining a phase and amplitude difference between the reference array element and each of other array elements, and performing compensation based on the phase and amplitude difference, where m and n are positive integers.

S2, in a case where the multiple channels are online, performing a second correction method: acquiring an amplitude-phase value of each channel and an amplitude-phase value of a respective correction channel; determining an amplitude-phase difference between the amplitude-phase value of each channel and the amplitude-phase value of the respective correction channel; and adjusting a phase weight of each channel based on the amplitude-phase difference, so as to make the phase and amplitude of each channel consistent.

Optionally, in the present embodiment, the above storage medium may include, but is not limited to, various media capable of storing a computer program, such as a Universal Serial Bus Flash Disk (a USB flash disk), an ROM, an RAM, a mobile hard disk, a magnetic disk and an optical disc.

The present disclosure further provides an electronic device, including a memory having a computer program stored therein, and a processor configured to run the computer program to perform the operations according to any one of the method embodiments described above.

Optionally, the electronic device may further include a transmission device connected to the processor, and an input/output device connected to the processor.

Optionally, in the present disclosure, the processor may be configured to perform following operations S1 to S2 through the computer program.

S1, in a case where multiple channels are offline, performing a first correction method: testing amplitude and phase parameters of m*n array elements in a subarray corresponding to each channel; selecting one array element from the array elements of the tested subarray as a reference array element; and determining a phase and amplitude difference between the reference array element and each of other array elements, and performing compensation based on the phase and amplitude difference, where m and n are positive integers.

S2, in a case where the multiple channels are online, performing a second correction method: acquiring an amplitude-phase value of each channel and an amplitude-phase value of a respective correction channel; determining an amplitude-phase difference between the amplitude-phase value of each channel and the amplitude-phase value of the respective correction channel; and adjusting a phase weight of each channel based on the amplitude-phase difference, so as to make the phase and amplitude of each channel consistent.

Optionally, reference may be made to the examples described in the above embodiments and implementations for specific examples of the present embodiment, and thus the specific examples of the present embodiment are not described in detail here.

Apparently, it should be understood by those of ordinary skill in the art that all the modules or operations of the present disclosure described above may be implemented by a general-purpose computing device, may be integrated in a single computing device or distributed on a network composed of a plurality of computing devices. Optionally, the modules or operations may be implemented by program codes executable by a computing device, so that the modules or operations can be stored in a storage device and executed by a computing device. In some cases, the operations illustrated or described may be performed in an order different from that described herein. The modules or operations may be separately made into integrated circuit modules, or some of the modules or operations may be made into a single integrated circuit module. Thus, the present disclosure is not limited to any specific combination of hardware and software.

The description above is merely of the desirable embodiments of the present disclosure, but is not intended to limit the present disclosure. Various modifications and changes may be made to the present disclosure by those of ordinary skill in the art.

## Claims

1. A method for correcting multiple channels of digital-analog hybrid beamforming, wherein each of the multiple channels comprises an antenna subarray (110) comprising m*n array elements, and an antenna coupling array element (111), and the method comprises a first correction step and a second correction step, wherein
in a case where the multiple channels are offline, performing (S102) the first correction step comprising: for each of the multiple channels, detecting amplitude and phase parameters of the m*n array elements in the antenna subarray (110) corresponding to the channel; selecting one array element from the m*n array elements of the detected antenna subarray (110) as a reference array element; and determining a phase and amplitude difference between the reference array element and each of other array elements of the m*n array elements in the antenna subarray (110), and performing compensation based on the phase and amplitude difference, wherein m and n are positive integers greater than 1; and
in a case where the multiple channels are online, performing (S104) the second correction step comprising: acquiring an amplitude-phase value of each of the multiple channels and an amplitude-phase value of a correction channel corresponding to the antenna coupling array element (111) of the channel; determining an amplitude-phase difference between the amplitude-phase value of each of the multiple channels and the amplitude-phase value of the correction channel; and adjusting a phase weight of each of the multiple channels based on the amplitude-phase difference, so as to make the phase and amplitude of each of the multiple channels consistent.

2. The method of claim 1, wherein in a case where the multiple channels are transmitting channels and offline, the first correction step comprises:
setting initial phase and amplitude parameters corresponding to array elements of all the antenna subarrays (110) of a transmitter to be consistent;
for each of the multiple channels, detecting the amplitude and phase parameters of the m*n array elements in the antenna subarray (110) corresponding to the channel;
selecting one array element from the m*n array elements of the detected antenna subarray (110) as the reference array element; and
determining the phase and amplitude difference between the reference array element and each of the other array elements of the m*n array elements in the antenna subarray (110), and performing compensation based on the phase and amplitude difference until all the transmitting channels are corrected.

3. The method of claim 1, wherein in a case where the multiple channels are receiving channels and offline, the first correction step comprises:
setting initial phase and amplitude parameters corresponding to array elements of all antenna subarrays (110) of a receiver to be consistent;
for each of the multiple channels, detecting the amplitude and phase parameters of the m*n array elements in the antenna subarray (110) corresponding to the channel;
selecting one array element from the m*n array elements of the detected antenna subarray (110) as the reference array element; and
determining the phase and amplitude difference between the reference array element and each of the other array elements of the m*n array elements in the antenna subarray (110), and performing compensation based on the phase and amplitude difference until all the receiving channels are corrected.

4. The method of claim 1, wherein in a case where the multiple channels are transmitting channels and online, the second correction step comprises:
simultaneously transmitting intermediate frequency signals comprising correction sequences by digital-to-analog converters, called DACs (103), in N channels of a transmitter, and converting the intermediate frequency signals into millimeter wave signals by transmission processing modules (105), wherein N is the number of the multiple channels;
for each of the N channels, coupling the millimeter wave signal to the correction channel of the channel by the antenna coupling array element (111) of the channel, and synthesizing the millimeter wave signals into one millimeter wave signal by a multi-path combining and dividing module (112);
converting the synthesized millimeter wave signal into an intermediate frequency signal as a calibration signal by a calibration module (115);
switching the calibration signal back to an analog-to-digital converter, called ADC (104), of a designated channel through a switch (117), and demodulating convergent signals to obtain the amplitude-phase value of each transmitting channel and the amplitude-phase value of the correction channel of the transmitting channel;
subtracting the amplitude-phase value of a corresponding correction channel from the amplitude-phase value of each transmitting channel to obtain the amplitude-phase difference of each transmitting channel;
feeding a phase difference of each transmitting channel to a baseband unit, called BBU (101), and adjusting a baseband phase weight of each transmitting channel to make the phase of each transmitting channel consistent; and
adjusting an attenuator of the transmission processing module (105) based on an amplitude difference of each transmitting channel to make the amplitude of each transmitting channel consistent,
wherein the second correction step is repeatedly performed at every time power is re-supplied, or at fixed time intervals.

5. The method of claim 1, wherein in a case where the multiple channels are receiving channels and online, the second correction step comprises:
designating, by a receiver, a DAC (103) in one of N channels to transmit an intermediate frequency signal comprising a correction sequence, and switching the intermediate frequency signal to a calibration module (114) through a switch (116), wherein N is the number of the multiple channels;
converting the intermediate frequency signal into a millimeter wave signal by the calibration module (114), dividing the millimeter wave signal into N millimeter wave signals by a multi-path combining and dividing module (112), and transmitting the N millimeter wave signals through respective correction channels of the N channels;
for each of the N channels, coupling each of the N millimeter wave signals to each receiving channel by the antenna coupling array element (111) of the channel, and converting the millimeter wave signals into digital signals by receive processing modules (106) and ADCs (104);
demodulating the digital signal received on each receiving channel to obtain the amplitude-phase value of each receiving channel and the amplitude-phase value of the correction channel of the receiving channel;
subtracting the amplitude-phase value of a corresponding correction channel from the amplitude-phase value of each receiving channel to obtain the amplitude-phase difference of each receiving channel;
feeding a phase difference of each receiving channel to a BBU (101), and adjusting a signal phase weight of each receiving channel to make the phase of each receiving channel consistent; and
adjusting an attenuator of the receive processing module (106) based on an amplitude difference of each receiving channel to make the amplitude of each receiving channel consistent,
wherein the second correction step is repeatedly performed at every time power is re-supplied, or at fixed time intervals.

6. A computer-readable storage medium, in which a computer program is stored, wherein the computer program is configured to perform, when being run, the method of any one of claims 1 to 5.

7. An electronic device, comprising a memory having a computer program stored therein, and a processor configured to run the computer program to perform the method of any one of claims 1 to 5.

## Patentansprüche

1. Verfahren zum Korrigieren mehrerer Kanäle einer Digital-Analog-Hybrid-Strahlformung, wobei jeder der mehreren Kanäle eine Antennen-Untermatrix (110), die m*n Matrix-Elemente umfasst, und ein Antennenkopplungs-Matrix-Element (111) umfasst, und das Verfahren einen ersten Korrekturschritt und einen zweiten Korrekturschritt umfasst, wobei
in einem Fall, in dem die mehreren Kanäle offline sind, Durchführen (S102) des ersten Korrekturschritts, umfassend: für jeden der mehreren Kanäle, Detektieren von Amplituden- und Phasenparametern der m*n Matrix-Elemente in der Antennen-Untermatrix (110), die dem Kanal entsprechen; Auswählen eines Matrix-Elements aus den m*n Matrix-Elementen der detektierten Antennen-Untermatrix (110) als ein Referenz-Matrix-Element; und Bestimmen einer Phasen- und Amplitudendifferenz zwischen dem Referenz-Matrix-Element und jedem der anderen Matrix-Elemente der m*n Matrix-Elemente in der Antennen-Untermatrix (110), und Durchführen einer Kompensation auf Basis der Phasen- und Amplitudendifferenz, wobei m und n positive ganze Zahlen größer als 1 sind; und
in einem Fall, in dem die mehreren Kanäle online sind, Durchführen (S104) des zweiten Korrekturschritts, umfassend: Erfassen eines Amplitude-Phase-Werts jedes der mehreren Kanäle und eines Amplitude-Phase-Werts eines Korrekturkanals, der dem Antennenkopplungs-Matrix-Element (111) des Kanals entspricht; Bestimmen einer Amplituden-Phasen-Differenz zwischen dem Amplitude-Phase-Wert jedes der mehreren Kanäle und dem Amplitude-Phase-Wert des Korrekturkanals; und Anpassen einer Phasengewichtung jedes der mehreren Kanäle auf Basis der Amplituden-Phasen-Differenz, um die Phase und Amplitude jedes der mehreren Kanäle konsistent zu machen.

2. Verfahren nach Anspruch 1, wobei in einem Fall, in dem die mehreren Kanäle Übertragungskanäle und offline sind, der erste Korrekturschritt umfasst:
Einstellen anfänglicher Phasen- und Amplitudenparameter, die Matrix-Elementen aller Antennen-Untermatrizen (110) eines Senders entsprechen, so dass sie konsistent sind;
für jeden der mehreren Kanäle, Detektieren der Amplituden- und Phasenparameter der m*n Matrix-Elemente in der Antennen-Untermatrix (110), die dem Kanal entsprechen;
Auswählen eines Matrix-Elements aus den m*n Matrix-Elementen der detektierten Antennen-Untermatrix (110) als das Referenz-Matrix-Element; und
Bestimmen der Phasen- und Amplitudendifferenz zwischen dem Referenz-Matrix-Element und jedem der anderen Matrix-Elemente der m*n Matrix-Elemente in der Antennen-Untermatrix (110), und Durchführen einer Kompensation auf Basis der Phasen- und Amplitudendifferenz, bis alle Übertragungskanäle korrigiert sind.

3. Verfahren nach Anspruch 1, wobei in einem Fall, in dem die mehreren Kanäle Empfangskanäle und offline sind, der erste Korrekturschritt umfasst:
Einstellen anfänglicher Phasen- und Amplitudenparameter, die Matrix-Elementen aller Antennen-Untermatrizen (110) eines Empfängers entsprechen, so dass sie konsistent sind;
für jeden der mehreren Kanäle, Detektieren der Amplituden- und Phasenparameter der m*n Matrix-Elemente in der Antennen-Untermatrix (110), die dem Kanal entsprechen;
Auswählen eines Matrix-Elements aus den m*n Matrix-Elementen der detektierten Antennen-Untermatrix (110) als das Referenz-Matrix-Element; und
Bestimmen der Phasen- und Amplitudendifferenz zwischen dem Referenz-Matrix-Element und jedem der anderen Matrix-Elemente der m*n Matrix-Elemente in der Antennen-Untermatrix (110), und Durchführen einer Kompensation auf Basis der Phasen- und Amplitudendifferenz, bis alle Empfangskanäle korrigiert sind.

4. Verfahren nach Anspruch 1, wobei in einem Fall, in dem die mehreren Kanäle Übertragungskanäle und online sind, der zweite Korrekturschritt umfasst:
gleichzeitiges Übertragen von Zwischenfrequenzsignalen, die Korrektursequenzen umfassen, durch Digital-Analog-Wandler, die als DACs (103) bezeichnet werden, in N Kanälen eines Senders, und Umwandeln der Zwischenfrequenzsignale in Millimeterwellensignale durch Übertragungsverarbeitungsmodule (105), wobei N die Anzahl der mehreren Kanäle ist;
für jeden der N Kanäle, Koppeln des Millimeterwellensignals mit dem Korrekturkanal des Kanals durch das Antennenkopplungs-Matrix-Element (111) des Kanals, und Synthetisieren der Millimeterwellensignale in ein Millimeterwellensignal durch ein Mehrweg-Kombinierungs- und Teilungsmodul (112);
Umwandeln des synthetisierten Millimeterwellensignals in ein Zwischenfrequenzsignal als ein Kalibrierungssignal durch ein Kalibrierungsmodul (115);
Schalten des Kalibrierungssignals zurück zu einem Analog-DigitalWandler, der als ADC (104) bezeichnet wird, eines bestimmten Kanals durch einen Schalter (117), und Demodulieren konvergenter Signale, um den Amplitude-Phase-Wert jedes Übertragungskanals und den Amplitude-Phase-Wert des Korrekturkanals des Übertragungskanals zu erhalten;
Subtrahieren des Amplitude-Phase-Werts eines entsprechenden Korrekturkanals von dem Amplitude-Phase-Wert jedes Übertragungskanals, um die Amplituden-Phasen-Differenz jedes Übertragungskanals zu erhalten;
Zuführen einer Phasendifferenz jedes Übertragungskanals zu einer Basisband-Einheit, die als BBU (101) bezeichnet wird, und Anpassen einer Basisband-Phasengewichtung jedes Übertragungskanals, um die Phase jedes Übertragungskanals konsistent zu machen; und
Anpassen eines Dämpfers des Übertragungsverarbeitungsmoduls (105) auf Basis einer Amplitudendifferenz jedes Übertragungskanals, um die Amplitude jedes Übertragungskanals konsistent zu machen,
wobei der zweite Korrekturschritt zu jedem Zeitpunkt, zu dem Leistung erneut zugeführt wird, oder in festen Zeitintervallen wiederholt durchgeführt wird.

5. Verfahren nach Anspruch 1, wobei in einem Fall, in dem die mehreren Kanäle Empfangskanäle und online sind, der zweite Korrekturschritt umfasst:
Bestimmen, durch einen Empfänger, eines DAC (103) in einem von N Kanälen, um ein Zwischenfrequenzsignal zu übertragen, das eine Korrektursequenz umfasst, und Schalten des Zwischenfrequenzsignals zu einem Kalibrierungsmodul (114) durch einen Schalter (116), wobei N die Anzahl der mehreren Kanäle ist;
Umwandeln des Zwischenfrequenzsignals in ein Millimeterwellensignal durch das Kalibrierungsmodul (114), Teilen des Millimeterwellensignals in N Millimeterwellensignale durch ein Mehrweg-Kombinierungs- und Teilungsmodul (112), und Übertragen der N Millimeterwellensignale durch jeweilige Korrekturkanäle der N Kanäle;
für jeden der N Kanäle, Koppeln jedes der N Millimeterwellensignale mit jedem Empfangskanal durch das Antennenkopplungs-Matrix-Element (111) des Kanals, und Umwandeln der Millimeterwellensignale in digitale Signale durch Empfangsverarbeitungsmodule (106) und ADCs (104);
Demodulieren des digitalen Signals, das auf jedem Empfangskanal empfangen wird, um den Amplitude-Phase-Wert jedes Empfangskanals und den Amplitude-Phase-Wert des Korrekturkanals des Empfangskanals zu erhalten;
Subtrahieren des Amplitude-Phase-Werts eines entsprechenden Korrekturkanals von dem Amplitude-Phase-Wert jedes Empfangskanals, um die Amplituden-Phasen-Differenz jedes Empfangskanals zu erhalten;
Zuführen einer Phasendifferenz jedes Empfangskanals zu einer BBU (101), und Anpassen einer Signalphasengewichtung jedes Empfangskanals, um die Phase jedes Empfangskanals konsistent zu machen; und
Anpassen eines Dämpfers des Empfangsverarbeitungsmoduls (106) auf Basis einer Amplitudendifferenz jedes Empfangskanals, um die Amplitude jedes Empfangskanals konsistent zu machen,
wobei der zweite Korrekturschritt zu jedem Zeitpunkt, zu dem Leistung erneut zugeführt wird, oder in festen Zeitintervallen wiederholt durchgeführt wird.

6. Computerlesbares Speichermedium, in dem ein Computerprogramm gespeichert ist, wobei das Computerprogramm konfiguriert ist, um, wenn es ausgeführt wird, das Verfahren nach einem der Ansprüche 1 bis 5 durchzuführen.

7. Elektronisches Gerät, umfassend einen Speicher mit einem darin gespeicherten Computerprogramm und einen Prozessor, der konfiguriert ist, um das Computerprogramm auszuführen, um das Verfahren nach einem der Ansprüche 1 bis 5 durchzuführen.

## Revendications

1. Procédé pour corriger de multiples canaux de formation de faisceau hybride numérique-analogique, dans lequel chacun des multiples canaux comprend un sous-réseau d'antennes (110) comprenant m*n éléments de réseau, et un élément de réseau de couplage d'antennes (111), et le procédé comprend une première étape de correction et une seconde étape de correction, dans lequel
dans un cas où les multiples canaux sont hors ligne, réaliser (S102) la première étape de correction comprenant : pour chacun des multiples canaux, détecter des paramètres d'amplitude et de phase des m*n éléments de réseau dans le sous-réseau d'antennes (110) correspondant au canal ; sélectionner un élément de réseau parmi les m*n éléments de réseau du sous-réseau d'antennes (110) détecté en tant qu'élément de réseau de référence ; et déterminer une différence de phase et d'amplitude entre l'élément de réseau de référence et chacun des autres éléments de réseau des m*n éléments de réseau dans le sous-réseau d'antennes (110), et réaliser une compensation sur la base de la différence de phase et d'amplitude, dans lequel m et n sont des entiers positifs supérieurs à 1 ; et
dans un cas où les multiples canaux sont en ligne, réaliser (S104) la seconde étape de correction comprenant : acquérir une valeur d'amplitude-phase de chacun des multiples canaux et une valeur d'amplitude-phase d'un canal de correction correspondant à l'élément de réseau de couplage d'antennes (111) du canal ; déterminer une différence d'amplitude-phase entre la valeur d'amplitude-phase de chacun des multiples canaux et la valeur d'amplitude-phase du canal de correction ; et ajuster une pondération de phase de chacun des multiples canaux sur la base de la différence d'amplitude-phase, de manière à faire concorder la phase et l'amplitude de chacun des multiples canaux.

2. Procédé selon la revendication 1, dans lequel dans un cas où les multiples canaux sont des canaux de transmission et hors ligne, la première étape de correction comprend :
définir des paramètres de phase et d'amplitude initiaux correspondant à des éléments de réseau de tous les sous-réseaux d'antennes (110) d'un émetteur pour qu'ils soient concordants ;
pour chacun des multiples canaux, détecter les paramètres d'amplitude et de phase des m*n éléments de réseau dans le sous-réseau d'antennes (110) correspondant au canal ;
sélectionner un élément de réseau parmi les m*n éléments de réseau du sous-réseau d'antennes (110) détecté en tant qu'élément de réseau de référence ; et
déterminer la différence de phase et d'amplitude entre l'élément de réseau de référence et chacun des autres éléments de réseau des m*n éléments de réseau dans le sous-réseau d'antennes (110), et réaliser une compensation sur la base de la différence de phase et d'amplitude jusqu'à ce que tous les canaux de transmission soient corrigés.

3. Procédé selon la revendication 1, dans lequel dans un cas où les multiples canaux sont des canaux de réception et hors ligne, la première étape de correction comprend :
définir des paramètres de phase et d'amplitude initiaux correspondant à des éléments de réseau de tous les sous-réseaux d'antennes (110) d'un récepteur pour qu'ils soient concordants ;
pour chacun des multiples canaux, détecter les paramètres d'amplitude et de phase des m*n éléments de réseau dans le sous-réseau d'antennes (110) correspondant au canal ;
sélectionner un élément de réseau parmi les m*n éléments de réseau du sous-réseau d'antennes (110) détecté en tant qu'élément de réseau de référence ; et
déterminer la différence de phase et d'amplitude entre l'élément de réseau de référence et chacun des autres éléments de réseau des m*n éléments de réseau dans le sous-réseau d'antennes (110), et réaliser une compensation sur la base de la différence de phase et d'amplitude jusqu'à ce que tous les canaux de réception soient corrigés.

4. Procédé selon la revendication 1, dans lequel dans un cas où les multiples canaux sont des canaux de transmission et en ligne, la seconde étape de correction comprend :
envoyer simultanément des signaux de fréquence intermédiaire comprenant des séquences de correction par des convertisseurs numérique-analogique, appelés DAC (103), dans N canaux d'un émetteur, et convertir les signaux de fréquence intermédiaire en signaux d'onde millimétrique par des modules de traitement de transmission (105), où N est le nombre des multiples canaux ;
pour chacun des N canaux, coupler le signal d'onde millimétrique au canal de correction du canal par l'élément de réseau de couplage d'antennes (111) du canal, et synthétiser les signaux d'onde millimétrique en un signal d'onde millimétrique par un module de combinaison et de division à trajets multiples (112) ;
convertir le signal d'onde millimétrique synthétisé en un signal de fréquence intermédiaire en tant que signal d'étalonnage par un module d'étalonnage (115) ;
commuter le signal d'étalonnage en retour vers un convertisseur analogique-numérique, appelé ADC (104), d'un canal désigné par l'intermédiaire d'un commutateur (117), et démoduler des signaux convergents pour obtenir la valeur d'amplitude-phase de chaque canal de transmission et la valeur d'amplitude-phase du canal de correction du canal de transmission ;
soustraire la valeur d'amplitude-phase d'un canal de correction correspondant de la valeur d'amplitude-phase de chaque canal de transmission pour obtenir la différence d'amplitude-phase de chaque canal de transmission ;
fournir une différence de phase de chaque canal de transmission à une unité de bande de base, appelée BBU (101), et ajuster un poids de phase de bande de base de chaque canal de transmission pour faire concorder la phase de chaque canal de transmission ; et
ajuster un atténuateur du module de traitement de transmission (105) sur la base d'une différence d'amplitude de chaque canal de transmission pour faire concorder l'amplitude de chaque canal de transmission,
dans lequel la seconde étape de correction est réalisée de manière répétée à chaque fois qu'une puissance est réalimentée, ou à des intervalles de temps fixes.

5. Procédé selon la revendication 1, dans lequel dans un cas où les multiples canaux sont des canaux de réception et en ligne, la seconde étape de correction comprend :
désigner, par un récepteur, un DAC (103) dans l'un de N canaux pour envoyer un signal de fréquence intermédiaire comprenant une séquence de correction, et commuter le signal de fréquence intermédiaire vers un module d'étalonnage (114) par l'intermédiaire d'un commutateur (116), où N est le nombre des multiples canaux ;
convertir le signal de fréquence intermédiaire en un signal d'onde millimétrique par le module d'étalonnage (114), diviser le signal d'onde millimétrique en N signaux d'onde millimétrique par un module de combinaison et de division à trajets multiples (112), et envoyer les N signaux d'onde millimétrique par l'intermédiaire de canaux de correction respectifs des N canaux ;
pour chacun des N canaux, coupler chacun des N signaux d'onde millimétrique à chaque canal de réception par l'élément de réseau de couplage d'antennes (111) du canal, et convertir les signaux d'onde millimétrique en signaux numériques par des modules de traitement de réception (106) et des ADC (104) ;
démoduler le signal numérique reçu sur chaque canal de réception pour obtenir la valeur d'amplitude-phase de chaque canal de réception et la valeur d'amplitude-phase du canal de correction du canal de réception ;
soustraire la valeur d'amplitude-phase d'un canal de correction correspondant de la valeur d'amplitude-phase de chaque canal de réception pour obtenir la différence d'amplitude-phase de chaque canal de réception ;
fournir une différence de phase de chaque canal de réception à une BBU (101), et ajuster une pondération de phase de signal de chaque canal de réception pour faire concorder la phase de chaque canal de réception ; et
ajuster un atténuateur du module de traitement de réception (106) sur la base d'une différence d'amplitude de chaque canal de réception pour faire concorder l'amplitude de chaque canal de réception,
dans lequel la seconde étape de correction est réalisée de manière répétée à chaque fois qu'une puissance est réalimentée, ou à des intervalles de temps fixes.

6. Moyen de stockage lisible par ordinateur, dans lequel un programme informatique est stocké, dans lequel le programme informatique est configuré pour réaliser, lorsqu'il est exécuté, le procédé selon l'une quelconque des revendications 1 à 5.

7. Dispositif électronique, comprenant une mémoire dans laquelle est stocké un programme informatique, et un processeur configuré pour exécuter le programme informatique pour réaliser le procédé selon l'une quelconque des revendications 1 à 5.
